# EUROPEAN PATENT APPLICATION

(11) **EP 0 688 499 A2**
(43) Date of publication of application: **27.12.1995**
(21) Application number: 95670005.8
(22) Date of filing: 22.06.1995
(51) Int. Cl.: A01N 3/00, A23B 7/055, A23L 2/42

(54) **Preservation of fresh plant parts and their juices using liquid nitrogen**

(30) Priority: 22.06.1994 PT 10153294
(71) Applicant: ECOVERDE- PESQUISA, PRODUCAO E COMERCIALIZACAO DE PRODUTOS DE ORIGEM VEGETAL E ANIMAL, LDA., 2890 Alcochete (PT)
(72) Inventor: Leal De Matos, Joao Carlos, P-1050 Lisboa (PT)
(74) Representative: Dinis de Carvalho, José Eduardo

(57) **Abstract**

This invention relates to fresh plants, fresh plant parts or their fresh juices preserves, with medicinal, dietetic or cosmetic interest, which keep their natural and original properties and raise their bioavailability and are obtained by means of a sudden freezing operation by contact (e.g. immersion) with liquid nitrogen at a temperature around -200°C and crystalization of the intracellular water in very small crystals, keeping the cellular walls integrity.
The raw materials can be treated with solutions of substances which enhance the crystalization and the bioavailability.
For use in cosmetic, dietetic and therapeutic fields.

## Description

This invention relates to fresh plants, fresh plant parts or their fresh juices preserves, which keep their natural and original properties and raise their bioavailability.

Plants have been used by man since time immemorial with therapeutic, dietetic and cosmetic purposes.

In spite of being harvested in the wild state in the beginning, and even now, specially the medicinal plants, they are also cultivated. In the Middle Ages, the convent gardens, supplied the conventual pharmacies with medicinal plants.

Nowadays, these plants are cultivated in highly specialized exploitations in order to obtain high concentrations of the active substances.

In all cases, the harvest time is determinant to the biological activity.

Challenged with the need to harvest the plants at precise times, and the necessity to have them available all year long, man has always essayed different processes in order to preserve, mainly the medicinal plants, without susbstantial loss of their original properties. The oldest one, has been to dry them, and it still is the simplest and most used method of preservation.

For example, medicinal plants should be dried in a shadowy condition.

However, the drying process causes a loss of the volatile susbtances, which are generally the most active substances of the aromatic plants, as well as loss of their characteristical organoleptic properties, also very important in the case of dietetic or cosmetic plants.

Drying causes, in several cases, fermentative processes, which are responsible for changes in the active principles.

It also diminishes the bioavailability, as fresh plants are much more assimilable.

Another known process, specially for medicinal plants, is to autoclave the fresh plants in an ethanol saturated atmosphere, in order to obtain a fixation and to destroy the enzimes.

However, heating also induces non negligeable changes on the active principle contents and losses in the essential oils contents.

In the absence of satisfactory preservation processes of plants "in natura", the preparation of medicinal plants extracts, tinctures and alcoholates is currently processed as for the preparation of fruits, legumes and juices preserves, by heat sterilization.

Heat sterilization is not a satisfactory method for medicinal plants, due to the liability of their active principles.

Heating also diminishes the contents in vitamins, enzimes and alters the organoleptic properties of dietetic plants.

As for extracts, tinctures or alcoholates, which are generally hydroalcoholics, the alcohol is not well tolerated, mainly in cases of digestive pathology.

It also happens that the period of time established to heat most of these preparations is too long, as it is the case of many extracts, which causes losses of the original properties of the plants.

The freezing process has also been used, specially for foods and dietetic plants. Classically at temperatures between -30° C and -18° C.

Due to the freezing time, this process resukts in the intracellular water crystalization, under the form of big crystals, leading to the explosion of the cellular walls.

The intracellular enzymes are thus liberated and subsequential fermentations are produced.

This process may run very fast and deteriorate the active principles contents as well as the organoleptic properties of the plants thus frozen.

The fresh plants, fresh plant parts and fresh juices preserves which are the object of this invention, are prepared by freezing, practically by an instantaneous method, by direct contact (e.g. by immersion) with liquid nitrogen at a temperature around -200°C (often following the treatment of the fresh plants with appropriate solutions), in order to fixate the initial plant properties, as this process produces very small water crystals.

With this method, the cellular walls are very well preserved as well as the active substances and the organoleptic properties.

Freezing time is also very important for the preservation of the active principles (e.g. vitamin C), in juices.

Among the solutions which can be used for the treatment of fresh plants before freezing by liquid nitrogen, are the aqueous solutions of propyleneglycol, glycerol, glucose, fructose, lactose, saccharose or mineral salts.

Some of these substances also contribute to raise the bioavailability of the plants thus preserved, as they are ordinarily incorporated in the solvent used to obtain their extracts. After being treated with these solutions, the plants are frozen by sudden contact (e.g. immersion) with liquid nitrogen at a temperature around -200°C.

The plants, plant parts or their juices thus frozen, may then be perfectly preserved at the traditional freezing temperatures (-30°C to -18°C) and transported, stored and sold to consumers in traditional freezing circuits (at temperatures between -30°C and -18°C).

They can also be very well preserved in home freezers.

When brought back to the appropriate temperatures, they are able to provide, in a perfect state, all their active principles, vitamins and enzymes, as well as their original organoleptic characteristics.

This is very beneficial to consumers, who can use them "in natura" or under the form of infusions, decoctions, baths or creams and their juices (medicinal or cosmetic plants), and, in the case of dietetic plants, "in natura" juices or cooked.

In the specific examples which are presented below, several medicinal, dietetic or cosmetic plants, their parts or their juices, are used as starting materials.

However, it should be emphasized that other medicinal, dietetic or cosmetic plants, their parts, or their juices, can be used as well.

Therefore it should be very well understood that the following examples are given solely to demonstrate the unique features of the methods of preparation of the plants preserves which are the subject of the present invention, and should not be construed by way of limitation or restriction thereof.

### Example 1 - Fresh "RUMEX ACETOSA" leaves preserve:

100g of "RUMEX ACETOSA" fresh leaves are sprayed with a 0.9% sodium chloride aqueous solution and suddenly immersed in liquid nitrogen at a temperature around -200°C.

The plant thus frozen is packed under an inert atmosphere or in vacuum, in stanch conditions, and is stored, transported and sold at a temperature between -30°C and -18°C.

### Example 2 - Fresh "BORRAGO OFFICINALIS" leaves preserve:

a) 100g of "BORRAGO OFFICINALIS" fresh leaves are sprayed with a 2.02% magnesium chloride aqueous solution, and suddenly immersed in liquid nitrogen, at a temperature around -200°C.
   The plant thus frozen is packed under an inert atmosphere or in vacuum, in stanch conditions and is stored, transported and sold at a temperature between -30°C and -18°C
b) 100g of "BORRAGO OFFICINALIS" fresh leaves are sprayed with a 5.05% fructose aqueous solution and suddenly immersed in liquid nitrogen at a temperature around -200°C.

The plant thus frozen is packed under an inert atmosphere or in vacuum, in stanch conditions, and is stored, transported and sold at a temperature between -30°c and -18°C.

### Example 3 - Fresh "ANTHRISCUS CEREFOLIUM" leaves preserve:

100g of "ANTHRISCUS CEREFOLIUM" fresh leaves are sprayed with a 0.9% sodium chloride aqueous solution and suddenly immersed in liquid nitrogen, at a temperature around -200°C.

The plant thus frozen is packed under an inert atmosphere or in vacuum, in stanch conditions and is stored, transported and sold at a temperature between -30°C and -18°C.

### Example 4 - Fresh "TROPOELUM MAJUS" flowers and leaves preserve.:

100g of a mixture of "TROPOELUM MAJUS" fresh flowers and leaves is sprayed with a 0.9% sodium chloride aqueous solution and suddenly immersed in liquid nitrogen at a temperature around -200°C.

The plant thus frozen is packed under an inert atmosphere or in vacuum, in stanch conditions, and is stored, transported and sold at a temperature between -30°C and -18°C.

### Example 5 - Fresh "CORIANDRUM SATIVUM" leaves preserve:

100g of"CORIANDRUM SATIVUM" fresh leaves are sprayed with a 0.5% to 5% potassium chloride and 0.450% sodium chloride aqueous solution and suddenly immersed in liquid nitrogen, at a temperature around -200°C.

The plant thus frozen is packed under an inert atmosphere or in vacuum, in stanch conditions and is stored, transported and sold at a temperature between -30°C and -18°C

### Example 6 - Fresh "TARAXACUM OFFICINALE" leaves preserve:

100g of "TARAXACUM OFFICINALE" fresh leaves are sprayed with a 1.19% potassium chloride aqueous solution and suddenly immersed in liquid nitrogen, at a temperature around -200°C.

The plant thus frozen is packed under an inert atmosphere or in vacuum, in stanch conditions and is stored, transported and sold at a temperature between -30°C and -18°C.

### Example 7 - Fresh "ANETHUM GRAVEOLENS" leaves preserve:

a) 100g of "ANETHUM GRAVEOLENS" fresh leaves are sprayed with a 0.9% sodium chloride aqueous solution and suddenly immersed in liquid nitrogen at a temperature around -200°C.
   The plant thus frozen is packed under an inert atmosphere or in vacuum, in stanch conditions and is stored, transported and sold at a temperature between -30°C and -18°C.
b) 100g of "ANETHUM GRAVEOLENS" fresh leaves are sprayed with a 1.02% magnesium chloride aqueous solution and suddenly immersed in liquid nitrogen at a temperature around -200°C.
   The plant thus frozen is packed under an inert atmosphere or in vacuum, in stanch conditions and is stored, transported and sold at a temperature between -30°C and -18°C.
c) 100g of "ANETHUM GRAVEOLENS" fresh leaves are sprayed with a 2.6% glycerol aqueous solution and suddenly immersed in liquid nitrogen at a temperature around -200°C.

The plant thus frozen is packed under an inert atmosphere or in vacuum, in stanch conditions, and is stored, transported and sold at a temperature between -30°C and -18°C

### Example 8 - Fresh "MELISSA OFFICINALIS" preserve:

300g of fresh "MELISSA OFFICINALIS" are sprayed with a 5.2% glycerol aqueous solution and suddenly immersed in liquid nitrogen at a temperature around -200°C.

The plant thus frozen is packed in 7.5g unitary dose sachets, under an inert atmosphere or in vacuum, in stanch conditions and is packed in packets of 20 sachets. These packets are stored, transported and sold at a temperature between -30°C and -18°C.

### Example 9 - Fresh "ARTEMISA DRACUNCULUS" leaves preserve:

100g of "ARTEMISA DRACUNCULUS" fresh leaves are sprayed with a 0.9% sodium chloride aqueous solution and suddenly immersed in liquid nitrogen at a temperature around -200°C.

The plant thus frozen is packed under an inert atmosphere or in vacuum, in stanch conditions and is stored, transported and sold at a temperature between -30°C and -18°C

### Example 10 - Fresh "FOENICUM VULGARE" leaves preserve:

100g of "FOENICUM VULGARE" fresh leaves are sprayed with a 0.9% sodium chloride aqueous solution and suddenly immersed in liquid nitrogen at a temperature around -200°C.

The plant thus frozen is packed under an inert atmosphere or in vacuum, in stanch conditions and is stored, transported and sold at a temperature between -30°C and -18°C.

### Example 11 - Fresh "PELARGONIUM GRAVEOLENS" leaves preserve:

100g of"PELARGONIUM GRAVEOLENS" fresh leaves are sprayed with a 5.05% fructose aqueous solution and suddenly immersed in liquid nitrogen at a temperature around -200°C.

The plant thus frozen is packed under an inert atmosphere or in vacuum, in stanch conditions and is stored, transported and sold at a temperature between -30°C and -18°C

### Example 12 - Fresh "OCIMUM BASILICUM" leaves preserve:

100g of "OCIMUM BASILICUM" fresh leaves are sprayed with a 1.01% magnesium and 0.45% sodium chloride and suddenly immersed in liquid nitrogen at a temperature around -200°C.

The plant thus frozen is packed under an inert atmosphere or in vacuum, in stanch conditions and is stored, transported and sold at a temperature between -30°C and -18°C.

### Example 13 - Fresh "ACHILLEA MILLEFOLIUM" leaves preserve:

100g of "ACHILLEA MILLEFOLIUM" fresh leaves, are sprayed with a 5.05% fructose and 2.6% glycerol aqueous solution and suddenly immersed in liquid nitrogen at a temperature around -200°C.

The plant thus frozen is packed under an inert atmosphere or in vacuum, in stanch conditions and is stored, transported and sold at a temperature between -30°C and -18°C.

### Example 14 - Fresh "ROSA GALLICA OFFICINALIS" petals preserve:

100g of "ROSA GALLICA OFFICINALIS" fresh petals are sprayed with a 5.2% glycerol aqueous solution and suddenly immersed in liquid nitrogen at a temperature around -200°C.

The plant thus frozen is packed under an inert atmosphere or in vacuum, in stanch conditions and is stored, transported and sold at a temperature between -30°C and -18°C.

### Example 15 - Fresh "SATUREJA MONTANA" leaves preserve:

100g of "SATUREJA MONTANA" fresh leaves are sprayed with a 1.01% magnesium and 0.45% sodium chloride aqueous solution and suddenly immersed in liquid nitrogen at a temperature around -200°C.

The plant thus frozen is packed under an inert atmosphere or in vacuum, in stanch conditions and is stored, transported and sold at a temperature between -30°C and -18°C.

### Example 16 - Fresh "VIOLA ODORATA" flowers preserve:

a) 100g of "VIOLA ODORATA" fresh flowers are suddenly immersed in liquid nitrogen at a temperature around -200°C.
   The plant thus frozen is packed under an inert atmosphere or in vacuum, in stanch conditions and is stored, transported and sold at a temperature between -30°C and -18°C.
b) 100g of "VIOLA OSORATA" fresh flowers are sprayed with a 5.2% glycerol aqueous solution and suddenly immersed in liquid nitrogen at a temperature around -200°C.

The plant thus frozen is packed under an inert atmosphere or in vacuum, in stanch conditions and is stored, transported and sold at a temperature between -30°C and -18°C.

### Example 17 - Fresh "ANANAS LOMOSUS" or "ANANAS SATIVUS" fruits preserve

a) 250g of "ANANAS LOMOSUS" or "ANANAS SATIVUS" fresh fruits slices (without peals) are suddenly immersed in liquid nitrogen at a temperature around -200°C.
   The fruit thus frozen is packed under an inert atmosphere or in vacuum, in stanch conditions and is stored, transported and sold at a temperature between -30°C and -18°C.
b) 250g of "ANANAS LOMOSUS" or "ANANAS SATIVUS" fresh fruits slices (without peals) are sprayed with a 9.25% saccharose aqueous solution and suddenly immersed in liquid nitrogen at a temperature around -200°C.

The fruit thus frozen is packed under an inert atmosphere or in vacuum, in stanch conditions and is stored, transported and sold at a temperature between -30°C and -18°C.

### Example 18 - Fresh "CITRUS AURANTIUM" juice preserve:

250ml of "CITRUS AURANTIUM" fresh juice packed in packs of impermeable cellulose derivatives, under an inert atmosphere are suddenly immersed in liquid nitrogen at a temperature around -200°C.

The juice thus frozen is stored, transported and sold at a temperature between -30°C and -18°C.

## Claims

1. Fresh plants or their fresh parts or their fresh juices preserves of medicinal, dietetic or cosmetic interest, keeping their original properties, which is obtained by means of a sudden freezing by immersion or contact with liquid nitrogen at a temperature around -200°C.

2. The plants or their parts preserves mentioned in Claim 1, which can be treated with an aqueous solution of substances which enhance the freezing operation.

3. The plants or their parts preserves mentioned in Claim 1, wherein the substances mentioned in Claim 2 are propylene glycol, glycerol, glucose, fructose, lactose, saccharose or mineral salts.

4. The plants or their parts mentioned in Claim 1 where the intracellular water is crystalized under the form of very small crystals in order not to deteriorate their cellular walls.

5. The cells of the plants or their parts preserves frozen by this method, mentioned in Claim 1, which keep in an unchanged form all the enzymes and all other intracellular components.

6. The plants, the plant parts or their juices preserves, mentioned in Claim 1, which integrally keep their original and natural active principles, vitamins, enzymes and organoleptic properties.

7. The plants, the plant parts or their juices frozen as mentioned in Claim 1, which can be stored, transported, sold and stored at home, in the traditional freezing conditions at a temperature between -30°C and -18°C.

8. The plants, plant parts or their juices preserves, as mentioned in Claim 1, which can be packed in appropriate stanch packages, under an inert atmosphere or in vacuum, in multidose packs or in unidose packs grouped in multiple packs.

9. The plants, plant parts or their juices preserves, mentioned in Claim 1, which recover all their natural and original properties when brought back to an appropriate temperature.

10. The plants and plant parts preserves mentioned in Claim 1, which bioavailability can be raised by the substances dissolved in the pre-treatment solutions mentioned in Claims 2 and 3.

11. The plants, plant parts or their juices preserves mentioned in Claim 1, which, when brought to the appropriate temperature, can be consumed "in natura" or under forms like infusions, decoctions, creams, lotions, baths and other, specially for medical or cosmetic use.

12. The plants, plant parts or their juices preserves mentioned in Claim l which can be used dietetically "in natura" or cooked.
